# EUROPEAN PATENT APPLICATION

(11) **EP 2 447 892 A1**
(43) Date of publication of application: **02.05.2012**
(21) Application number: 11184714.1
(22) Date of filing: 11.10.2011
(51) Int. Cl.: G06Q 10/00, G06Q 30/00

(54) **Method and system for enabling access to an electronic resource**

(30) Priority: 01.11.2010 NL 2005605
(71) Applicant: Jabbo B.V., 8013 RC Zwolle (NL)
(72) Inventor: Hulsebos, Rob, 8013 RC Zwolle (NL)
(74) Representative: Engelfriet, Arnoud Peter

(57) **Abstract**

A computer-implemented method of and system for enabling access to an electronic resource having a resource identifier, comprising generating an arbitrary code unrelated to the resource identifier, causing a machine-readable representation of the code to be coupled to the surface of an object, causing the object to be distributed to a recipient, receiving from the recipient a request to associate the code with the resource identifier, the request comprising an electronic representation of the code, in response to the request, storing an association of the code with the resource identifier in a database, in response to receiving a request to access the electronic resource, the request comprising the electronic representation of the code, returning the resource identifier associated with the code as obtained from the database. Also a system (100, 300) for implementing the method.

## Description

### Field of the invention

The invention relates to a method of and system for enabling access to an electronic resource through resource identifiers associated with machine-readable codes.

### Background of the invention

Electronic resources such as web pages, movies or photos are almost omnipresent today. Any kind of information is available today, from encyclopedic facts to entertainment content and from plain text one-liners to rich audiovisual content.

To access such electronic resources, their electronic addresses must be known. These addresses, or resource identifiers, are typically structured in some way to accommodate processing by both humans and machines. For example as uniform resource identifiers (URIs), defined in various Internet standards and Requests for Comments, e.g. RFC 3986. The common Uniform Resource Locator (URL) is a type of URI that identifies a resource via a representation of its primary access mechanism, e.g. its network location.

Such resource identifiers are easy to use in an electronic environment, but cumbersome in the physical world where they can only be printed on the surface of some object (e.g. on a page of a newspaper or the packaging of a product), requiring them to be typed in manually by a human.

Various schemes have been designed to allow the automatic processing of printed resource identifiers. These rely on a machine-readable representation of a code that is scanned and translated into an electronic code. A popular choice is the bar code, and within the field of bar codes the two-dimensional so-called QR code is well-known among the general population. As the machine-readable codes usually cannot accommodate the amount of characters needed to represent a full resource identifier, an intermediary service is used to provide a translation of the resource identifier associated with the code.

US2007/0205596 discloses a commercial product sales system allowing a purchase and sale of an applicable commercial product just by photographing a desired commercial product out of a seemingly ordinary commercial product advertisement print and transmitting the photographed data. The print contains a special sign, such as a bar code or QR code, and includes a URL of a sales company, advertisement name, advertisement date, product code, et cetera. The URL is a fixed code encoded in the special sign.

US6957224 discloses a system where a URL is registered with a server. A shorthand link is associated with the registered URL. The associated shorthand link and URL are logged in a registry database. When a request is received for a shorthand link, the registry database is searched for an associated URL

A disadvantage of such schemes is the administrative and technical overhead of associating the codes with the resource identifiers. As each resource identifier requires its own code, it is almost unavoidable that codes are generated one by one and subsequently associated with a given resource identifier prior to their printing on the desired object(s). This hampers their large-scale use: if a million resource identifiers need to be incorporated in print media, a million associated codes must be generated and printed. Furthermore, this approach requires that the resource identifier be known beforehand, which is not always desirable or practicable.

US2007189579A1 discloses a graphically based encoded image, symbol or icon that can serve as a link from physical material or visual displays to electronic data to retrieve specific or general information. In one example, a graphic image is encoded with a value that is linked to a reference lookup table. The lookup table maps a received data value to a company, a product, a promotion, a print medium, a vendor, a publication date, a URL, or one or more actions. In another example, a person affixes a personalized encoded image to a greeting card and specializes the text associated with the encoded image for a particular purpose through the data look up table.

The so-called "P8tch" service offered on the Internet at <http://www.p8tch.com/> allows for the ordering of patches to be embroidered, Velcro-coupled or otherwise affixed on clothing. The patches display QR-codes that can be scanned as usual. The QR-code is associated with an Internet URL comprising five semi-random characters at the domain p8t.ch, e.g. <http://p8t.ch/lahbg>. Each ordered patch is provided with a password that the customer can use to log into a control panel where that URL can be configured to redirect to a customer-specified Internet URL

### Summary of the invention

The invention advantageously provides a computer-implemented method of and system for enabling access to an electronic resource having a resource identifier, which alleviates the above disadvantage.

The method of the invention comprises:
● generating an arbitrary code unrelated to the resource identifier,
● causing a machine-readable representation of the code to be coupled to the surface of an obj ect,
● causing the object to be distributed to a recipient,
● receiving from the recipient a request to associate the code with the resource identifier, the request comprising an electronic representation of the code,
● in response to the request, storing an association of the code with the resource identifier in a database,
● in response to receiving a request to access the electronic resource, the request comprising the electronic representation of the code, returning the resource identifier associated with the code as obtained from the database.

The system of the invention comprises:
● a code generator for generating an arbitrary code unrelated to the resource identifier,
● a printing arrangement for causing a machine-readable representation of the code to be coupled to the surface of an object,
● means for causing the object to be distributed to a recipient,
● code association means for receiving from the recipient a request to associate the code with the resource identifier, the request comprising an electronic representation of the code, and, in response to the request, storing an association of the code with the resource identifier in a database,
● code translation means for in response to receiving a request to access the electronic resource from a further entity, the request comprising the electronic representation of the code, returning the resource identifier associated with the code as obtained from the database.

The invention thus provides that the code is generated and printed prior to its association with any particular resource identifier. This avoids the need for up-front administrative or technical measures to keep track of such associations before and during printing. Any number of codes may be generated and coupled to objects such as newspapers, postcards or toys and distributed to any desired recipients, for example by printing, engraving or pasting using glue. In accordance with the invention, it is those recipients that decide on the associations: they provide a request to this end after having received the code on a particular object. The received code is then associated in a database with the resource identifier indicated by the recipient of the code.

This approach advantageously allows the generation and distribution of an extremely large number of codes without having to keep track of resource identifiers. Thus, for example, an operator may print the machine-readable representations of these codes on postcards, sticker sheets, product packaging or other objects. The printing mechanism can be integrated in the manufacturing process of these objects without having to connect to any database that matches codes to resource identifiers for every code generated or printed. Only after receipt of a request from a particular recipient (a further entity, i.e. an entity not necessarily the same as the recipient to whom the object has been distributed) to associate a code with a given resource identifier does this association need to be created.

In a preferred embodiment the machine-readable representation comprises a bar code in accordance with ISO/IEC 18004:2006. This standard defines the so-called QR code (a registered trademark of Denso-Wave of Japan), which provides a popular and easy to recognize machine-readable representation of codes.

In a further embodiment, in response to the request to associate or the request to access, first the received electronic representation is validated to ensure the received electronic representation is indeed an electronic representation of the generated code. The system (100, 300) comprises a validation generator (302) that carries out the validation of the received electronic code. The possibility exists that a user may attempt to associate a third-party code with the electronic resource or to obtain a resource identifier for such a third-party code. Generally this will lead to undesired results - the association may fail, or may accidentally match against a registered resource identifier and thus return an unexpected resource identifier. By validating the representation against a predefined scheme, such attempts can be detected and handled appropriately. Validation may comprise checking for predefined symbols in the code or computing a check digit or checksum that is part of the code.

In a further embodiment the resource identifier is a uniform resource identifier as used for Internet resources. Uniform Resource Identifiers (URIs) are a common way of representing resource identifiers in a uniform manner, as defined in e.g. Internet RFC 3986.

In a further embodiment the association of the code with the resource identifier is stored in the database (350) using an indirection whereby the code is stored associated with an intermediary code in a first tuple and the intermediary code is stored associated with the resource identifier in a second tuple. This embodiment avoids having to store the resource identifier multiple times if multiple associations thereof with the code are to be stored.

In a further embodiment, in response to the request to associate, first a verification is carried out to establish that the code has not been previously associated with any resource identifier. This prevents changing an earlier association with a later-provided association.

In a further embodiment the generated code comprises at least one element that is common to all codes generated. This ensures that the code can easily be recognized as being suitable for associating with resource identifiers. For example, a common prefix for every code in the form of several letters and/or numbers can be used.

In an embodiment the code translation means are configured for, upon an unsuccessful attempt to obtain any resource identifier associated with the code from the database, activating the code association means. This advantageously turns a failed attempt to retrieve a resource identifier into a request to associate the provided code with a new resource identifier.

In an embodiment the code translation means are configured to obtain an indication of a geographical location associated with the further entity and for returning the resource identifier incorporating the indication. This embodiment advantageously permits the geographical targeting of the resource identifier, by embedding the location of the requesting entity into the resource identifier. The receiving system can then process the resource identifier to obtain geographically targeted information.

In an embodiment the request to associate relates to plural resource identifiers, the code association means being configured for storing the code associated with each of the plural resource identifiers, each resource identifier being associated with a respective geographical indication, and the code translation means are configured to obtain an indication of a geographical location associated with the further entity and to return one of the plural resource identifiers associated with the code and with the indication of the geographical location. This embodiment advantageously permits the geographical targeting of the resource identifier, by returning one of plural identifiers based on a geographical location of the entity that submitted the request for access.

The invention further provides for a computer program product comprising machine-readable instructions for causing a processor to execute the method of the invention.

### Brief description of the figures

The invention will now be explained in more detail with reference to the figures, in which:
Fig. 1 schematically shows a first aspect of the invention, in which a system is provided that comprises a code generator for generating arbitrary codes, a validation generator and a transmission module;
Figs. 2a, 2b and 2c schematically show example physical objects onto which machine-readable codes are affixed; and
Fig. 3 schematically illustrates a second aspect of the invention, providing a system to receive and process data from a client concerning a request to associate the code with a given resource identifier.

In the figures, same reference numbers indicate same or similar features. In cases where plural identical features, objects or items are shown, reference numerals are provided only for a representative sample so as to not affect clarity of the figures.

### Detailed description of certain embodiments

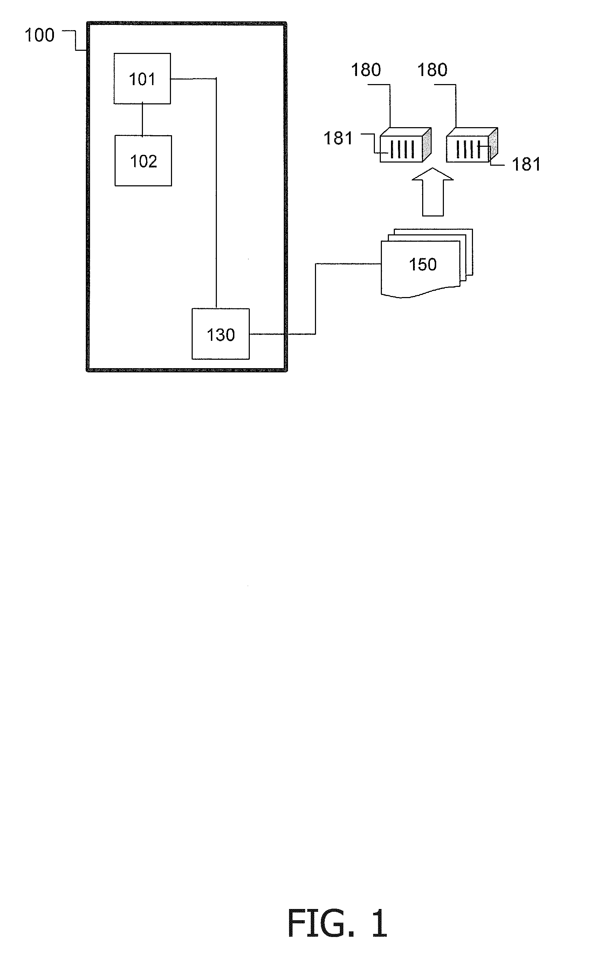

Fig. 1 schematically shows a first aspect of the invention. A system 100 is provided that comprises a code generator 101 for generating arbitrary codes, a validation generator 102 and a transmission module 130.

In accordance with the invention these arbitrary codes are unrelated to any resource identifier to be associated with them later. This makes it easy to generate the codes, e.g. simply using a pseudo-random number generator.

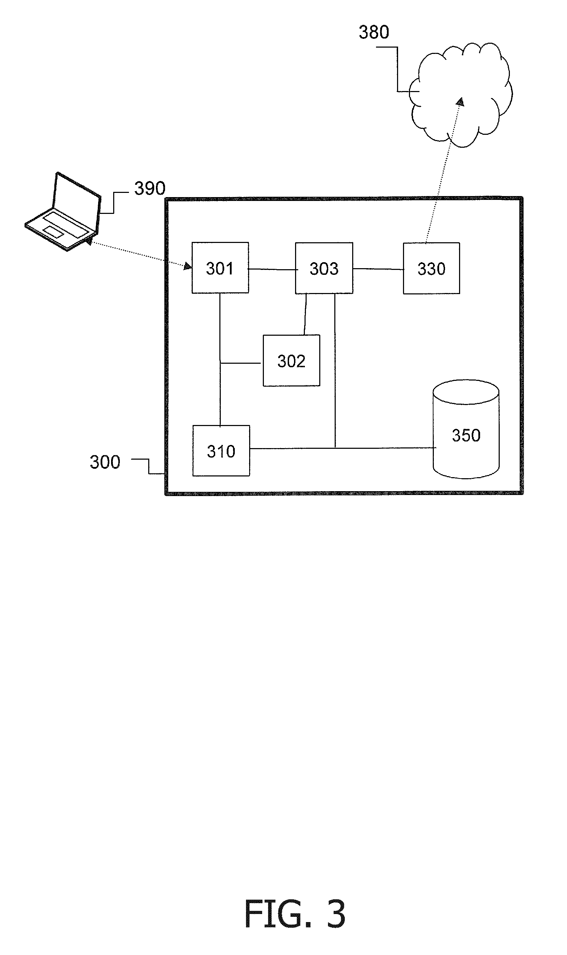

The code may comprise one or more elements common to all codes generated, such as a common prefix or postfix or pattern in the code. Such a prefix could be chosen as a trademark or name for the service to further improve brand recognition. For example, all codes could be prefixed with "BOEB", a trademark of the present applicant. Preferably, the code generator 101 employs a validation generator 102 that incorporates a validation code, such as a check digit or checksum, into the code. This ensures that during later processing of the code a validation of the code can be carried out, as will be elaborated upon with reference to Fig. 3 below.

An arrangement 150 is provided that couples machine-readable representations 181 of generated codes to the surface of objects 180, for example by means of printing, engraving or pasting using glue. Preferably the machine-readable representation 181 is a bar code. Bar codes are easy to recognize by the general public as being a machine-readable code, minimizing the need for accompanying text or graphics to explain the point. The so-called QR code makes a very good choice of bar code. The QR code is a two-dimensional bar code developed by Toyota subsidiary Denso-Wave in 1994. A current specification of the QR code model may be found in ISO/IEC 18004:2006 Information technology — Automatic identification and data capture techniques — QR Code 2005 bar code symbology specification. Use of the QR code is advantageous because many contemporary smartphones have built-in support for reading QR codes, making adoption of the invention easy.

Variants and future versions of this specification, or alternative bar code techniques, may of course also be used. Variants of the QR code include the micro QR code and the Design QR. Alternative bar code techniques include the Aztec Code, as disclosed in US patent 5591956, the Data Matrix code, as disclosed in U.S. Patent 5612524 and the MaxiCode, as specified in ISO/IEC 16023:2000. Of course one may also simply use the well-known EAN-13 bar code.

The representation 181 may in fact comprise plural representations in different format. For example, one may use a traditional one-dimensional bar code together with a QR code, or one may print the code using only alphanumerical symbols together with a QR code. This allows transcription of the code by a human in case scanning of the QR code fails, e.g. due to damage to the surface, or no suitable equipment is available.

These plural representations may be used for different purposes. For example, one code could be used during handling of requests to associate or translate (as discussed below with reference to Fig. 3) to identify the specific object 180 onto which the plural representations are affixed or to individualize otherwise identical codes. One might for example print sticker sheets with say a hundred representations 181 that all comprise the same QR code, and add a unique numeric code next to each QR code. This way, one can keep track of which of the one hundred representations has been used in the association or translation process, even though all representations comprise the same code and therefore will eventually translate into the same resource identifier.

The code may identify the specific object 180 as a Universal Product Number (UPN) code.

An object may comprise plural representations 181. For example, the object 180 may comprise a sheet with plural self-adhesive labels, each label having a separate QR code and being removable from the sheet for use on other objects. In such an embodiment, each representation 181 on the sheet may have the same QR code or a different QR code. With the same QR code, one may easily associate all the labels with one particular resource identifier. With different QR codes, one may easily acquire labels for different resource identifiers.

As shown in Fig. 1, the arrangement 150 is provided as a separate service offered by a third party. Therefore, a transmission module 130 transmits the data to be coupled to the objects 180 to the service operator, e.g. using a network such as the Internet. Alternatively, the system 100 can be incorporated into the arrangement 150 to supply the codes during the printing process. The system 100 in such a case could be implemented as a hardware or software add-in to the arrangement 150.

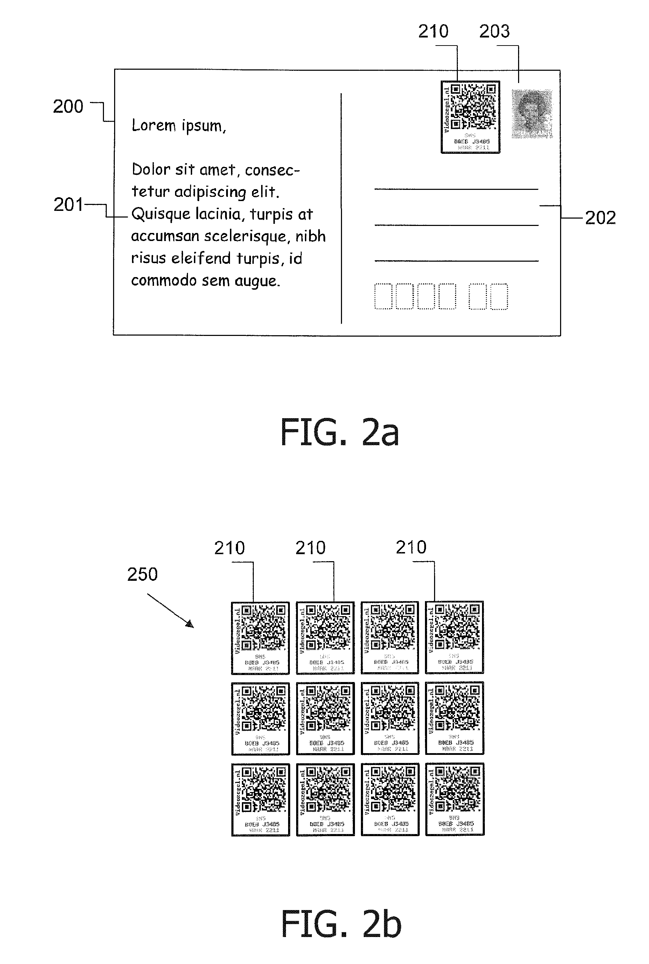

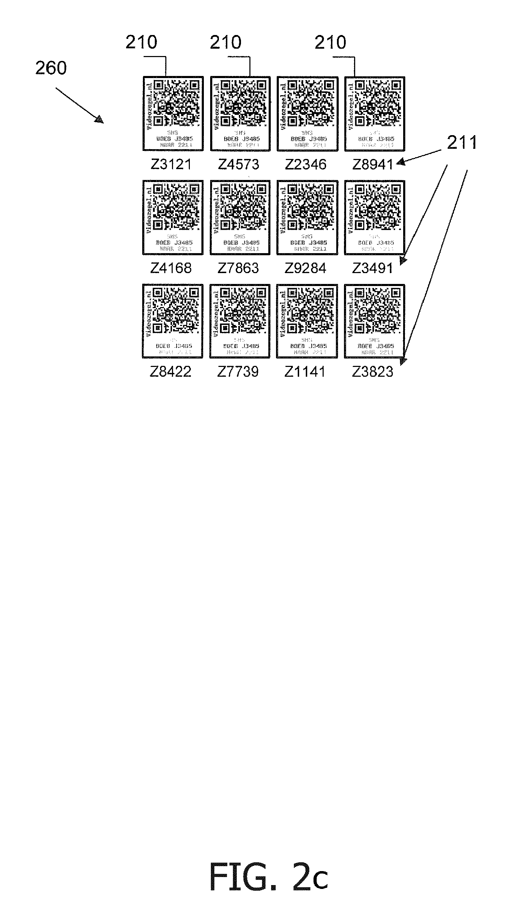

Fig. 2a, 2b and 2c illustrate example objects 200, 250, 260 onto which machine-readable codes 210 are affixed. The objects can in principle be any object. In accordance with the invention, machine-readable representation 210 comprises both a QR code and a human-readable code in alphanumeric characters - "BOEB J3485" - together with instructions on how to supply the code to the service described below.

In the embodiment of Fig. 2a the object is a postcard 200 of a common type, providing a space 201 for arbitrary text or other items as desired together with a space 202 a physical address of an intended recipient. A stamp 203 is included as well. The postcard 200 can be printed in any circulation. Each card may have a separate code printed thereon, or separate groups of cards may have an identical code printed on them. This allows for the sale of these cards as bundles.

In Fig. 2b the object 250 is a sheet with self-adhesive labels, comparable to postage stamps. Each of the twelve labels shown here comprises the same machine-readable representation 210, making the object 250 suitable for customers who desire to communicate a resource identifier to twelve recipients. Of course any number of labels can be used with the invention. Each of the labels may be coupled to an object 180 by applying the adhesive side to the side of the object and causing the glue to stick.

These embodiments allows the easy mass distribution of the codes in their machine-readable representation. Other types of paper objects, such as business cards, stationary, envelopes, photos (front or back), admission tickets, brochures or wrapping paper can of course also be used. The invention however also has application for other types of objects. For example, the machine-readable representation of the code may be printed on clothing, mugs, badges or novelty items such as toys or collectibles.

Fig. 2c shows a variation of Fig. 2b with an object 260 in the form of a sheet with self-adhesive labels. On sheet 260, each of the twelve labels has an additional code 211, unique to each label, while each label comprises the same machine-readable representation 210. The additional code 211 now enables identification of the individual label during association (see the discussion of Fig. 3 below) even though the machine-readable representations 210 are identical.

The machine-readable representation may also be printed, engraved or otherwise coupled to containers for items. For example, gift shops sometimes offer the option of having a present "canned" in a tin can. The tin can or its wrapper can then be provided with the machine-readable representation.

Note that at this point in time, the codes are not associated with any particular resource identifiers. In fact not even an association between the codes and the objects on which they are printed in machine-readable form is necessary at this stage. All that matters for the invention is that the codes are printed in machine-readable form on these objects, so that they may be distributed to interested parties. As will be discussed below, it is only after the receipt by those parties that an association between codes and resource identifiers will be created.

Now the objects are distributed to the intended recipients. Such distribution may take place using various chains of distribution, e.g. from a regional distributor to a local warehouse to shops that accommodate consumers who buy single or small numbers of objects.

Fig. 3 schematically illustrates a second aspect of the invention, providing a system 300 to receive and process data from a client 390. A communication module 301 receives the data, which can be either a request to associate or a request to access. The operator of the client 390 may be prompted to register and/or identify him- or herself somehow before the request is processed. This ensures that only known users can use the system 300. Further a payment may be demanded before the request is processed.

While shown in Fig. 3 as a laptop computer, the client 390 can of course be any type of device that can communicate with a server and allows the necessary information to be sent and received. An alternative is for example a mobile phone, allowing communication through e.g. SMS or similar mechanism with the server.

A request to associate concerns the desired association of a particular code as found in machine-readable form on a physical object with a particular resource identifier. To this end, the request comprises an electronic representation of the code and an indication of the resource identifier that the code is to be associated with. The resource identifier can be an identifier in accordance with any standard or specification, but preferably is a uniform resource identifier as used for Internet resources. Uniform Resource Identifiers (URIs) are a common way of representing resource identifiers in a uniform manner, as defined in e.g. Internet RFC 3986. In this embodiment the URI may e.g. identify a homepage or social network page for the person desiring the association or a company homepage or product information page for a a company desiring the association.

Alternatively, the resource identifier can identify a resource in a format defined by a particular resource provider. For example, the identifier may identify in a proprietary format an image or text in a content database operated by a content provider. This way the code can be used to access such image or text from the content database, but only if the resource provider is also known. This offers the opportunity to operate the invention as a single-provider service, as codes now will always result be associated with resources available from that provider. For example a provider may offer a dating service whereby profiles of users can be accessed with a unique (alpha-)numerical code.

The provider could distribute promotional cards with the machine-readable representations of the present invention to users, and allow them to create an association between the cards and their profile. The resource identifier then is the unique code for the profile.

The operator of the system 300 may offer the service for multiple providers but allocate for each resource provider a code element that is unique for that resource provider. This code element can be used as the aforementioned at least one code element that is common to all codes generated for that provider. This approach is known by itself from SMS shortcodes in mobile services, where a particular number and/or prefix to a code to be sent to a particular number is allocated to each SMS service provider.

A code association manager 303 processes the request, and if everything is in order, stores an association of the code with the resource identifier in a database 350.

In a first embodiment, the association is stored as a straightforward tuple in a database table containing the code and the resource identifier. In a more advanced embodiment, one may implement an indirect association whereby the code is stored associated with a resource code in a first tuple and the resource code is stored associated with the resource identifier in a second tuple. This embodiment prevents the storing of one resource identifier multiple times if multiple electronic codes are to be associated with that resource identifier. One can now easily update or replace the resource identifier in one place.

In embodiments where the codes to be associated are accompanied by additional codes 211 as e.g. in Fig. 2c, the code association manager 303 additionally registers the additional code 211 together with the association of the code 210 with the resource identifier. This enables later analysis of which resource identifier association originated from which particular instance of the machine-readable representation 210.

In a further embodiment the code is associated with plural resource identifiers instead of one. Each resource identifier is then associated with a respective geographical indication, for example specifying a city, province, county or state within a country, or a region designated by GPS coordinates or comparable means. This allows, as detailed below, the provision of geographically targeted resource identifiers upon presentation of the code from a given location.

In another embodiment the plural resource identifiers are stored in a parameterized or template fasion: one template resource identifier is presented, with one or more indications for where geographical locations are to be inserted. An example is an Internet URL where query parameters are used to indicate the longitude and latitude or street address of a location. This way, the system 300 can easily generate the plural resource identifiers given the template.

In a preferred embodiment a validation generator 302 is provided that carries out a validation of the received electronic code, for sample by checking a check digit or checksum that is part of the code. This is to ensure the received electronic representation is indeed an electronic representation of a code generated by generator 101. If the electronic code does not pass validation, further processing is aborted and an error message is returned to the client 390.

Further preferably a verification is carried out to establish that the code has not been previously associated with any resource identifier. This prevents changing an earlier association with a later-provided association.

Optionally in such embodiments the request could be sent in two stages: (1) receive and validate the electronic code, and (2) if the code passes validation, receive the resource identifier and store the association in the database 350. This avoids the needless entering of resource identifiers, which may be cumbersome especially if done by hand. Further preferably the system 300 employs a resource identifier checker 330 that attempts to establish the validity of the supplied resource identifier, e.g. by attempting to retrieve the identified resource from the Internet 380 or to access the resource from an internal database. In case the validity cannot be established, the client 390 is supplied with a warning or error. Of course such checking has its limitation, as valid resource identifiers may identify resources that are temporarily unavailable or resources that are password- or otherwise protected. While the check will fail in such cases, the resource identifier actually is valid. Hence one may choose to allow invalid resource identifiers. If validation of the resource identifier fails, the system 300 may offer the client 390 an option to retry to validation, to validate a different resource identifier or to store the association anyway. In case the resource identifier concerns a resource offered by the same operator as the system 300, the system 300 might also offer the client 390 an option to claim or register the resource in question, thus validating it.

Generally, it is desirable (and thus permitted) that the same resource identifier is associated with multiple electronic codes. However, in some embodiments one may want to block or limit attempts to associate an electronic code with a resource identifier that is already associated with another electronic code.

Optionally the system 300 may include means for updating the resource identifier associated with a particular code. This way an outdated resource identifier can be changed, for example.

Communication module 301 may also receive a request to access an electronic resource. Such a request comprises the electronic representation of the code. This request is passed to code translation module 310, which uses the code to retrieve the resource identifier associated with the received electronic code and returns the retrieved resource identifier using the communication module 301 to the client 390.

The code translation module 310 may employ the validation generator 302 to validate the received electronic code before attempting to retrieve a resource identifier. If the received electronic code does not validate, the code translation module 310 uses the communication module 301 to communicate the error to the client 390. Validation may comprise a date- and/or time-based validation, for example by having the code translation module 310 return the resource identifier only on certain days or times, or conversely to not return the resource identifier on certain days or times.

In an embodiment, an indication of a geographical location associated with the client 390 is available to the code translation module 310. Upon receiving the request to access, the module 310 returns the resource identifier incorporating the indication. For example, query parameters in an Internet URL are filled in to indicate the longitude and latitude, street address or town name of a location. The client 390 will receive this URL and process it to obtain location-based information.

In an alternative embodiment, the module 310 uses the electronic representation of the code in conjunction with the geographical indication to retrieve one of plural resource identifiers associated with the received electronic code, which is then returned using the communication module 301 to the client 390.

The plural resource identifiers in this embodiment are distinguished based on respective geographical locations. For example, each identifier may be assigned one city, province, county or state within a country. The geographical indication then is used to identify the city, province, county or state where the client 390 resides, which allows the returning of a resource identifier for that city, province, county or state.

The indication of the geographical location can be obtained in various ways. In one embodiment, the communication module 301 receives the indication of a geographical location from the client 390 and passes this to the code translation module 310. Various communication protocols allow for the transmission of such a location. The indication may comprise GPS coordinates if the client 390 has access to means for obtaining such coordinates, as is the case with many of today's smartphones and tablet devices. The client 390 may be programmed with a given location, e.g. a personal computer with this information entered into a user profile, which it passes to the system 300.

The indication may also be obtained by the system 300 from a source other than the client 390. For example, if the Internet is used to communicate the resource identifier, then the IP address of the client 390 can be mapped to a geographical location using any of the many available GeoIP databases. A communications network may provide geographical indications of its clients, for example as indications of the locations of the antennas with which clients communicate with the network. If the server 300 communicates with clients 390 that are kiosk terminals or similar systems, then the location of each terminal can be programmed in advance.

In addition to the plural resource identifiers with respective geographical locations, a default or fall-back resource identifier can be used in case no location can be determined or if none of the plural resource identifiers is associated with the location associated with the client 390. In case the client 390 is determined to be outside of the geographical location(s) associated with the code, the default or fall-back resource identifier may comprise an error message.

In case the received electronic code is not associated with any resource identifiers in the database 350, the code translation module 310 may communicate an error to the client 390. Alternatively, the code translation module 310 may active the code association manager 303. This way, the request to access is effectively turned into a request to associate.

In an embodiment the services provided by the code association manager 303 and those provided by the code translation module 310 may be provided through different types of communication channel. For example, communication with the code association manager 303 may be realized through SMS messages sent to and from a mobile phone, while the code translation module 310 may be accessible as a web-based service.

The above provides a description of several useful embodiments that serve to illustrate and describe the invention. The description is not intended to be an exhaustive description of all possible ways in which the invention can be implemented or used. The skilled person will be able to think of many modifications and variations that still rely on the essential features of the invention as presented in the claims. In addition, well-known methods, procedures, components, and circuits have not been described in detail. Some or all aspects of the invention may be implemented in a computer program product, i.e. a collection of computer program instructions stored on a computer readable storage device for execution by a computer. The instructions of the present invention may be in any interpretable or executable code mechanism, including but not limited to scripts, interpretable programs, dynamic link libraries (DLLs) or Java classes.

The instructions can be provided as complete executable programs, as modifications to existing programs or extensions ("plugins") for existing programs. Moreover, parts of the processing of the present invention may be distributed over multiple computers or processors for better performance, reliability, and/or cost.

Storage devices suitable for storing computer program instructions include all forms of non-volatile memory, including by way of example semiconductor memory devices, such as EPROM, EEPROM, and flash memory devices, magnetic disks such as the internal and external hard disk drives and removable disks, magneto-optical disks and CD-ROM disks. The computer program product can be distributed on such a storage device, or may be offered for download through HTTP, FTP or similar mechanism using a server connected to a network such as the Internet. Transmission of the computer program product by e-mail is of course also possible.

When constructing or interpreting the claims, any mention of reference signs shall not be regarded as a limitation of the claimed feature to the referenced feature or embodiment. The use of the word "comprising" in the claims does not exclude the presence of other features than claimed in a system, product or method implementing the invention. Any reference to a claim feature in the singular shall not exclude the presence of a plurality of this feature. The word "means" in a claim can refer to a single means or to plural means for providing the indicated function.

## Claims

1. A method of enabling access to an electronic resource through a resource identifier, comprising:
● generating an arbitrary code unrelated to the resource identifier,
● causing a machine-readable representation of the code to be coupled to the surface of an obj ect,
● causing the object to be distributed to a recipient,
● receiving from the recipient a request to associate the code with the resource identifier, the request comprising an electronic representation of the code,
● in response to the request, storing an association of the code with the resource identifier in a database,
● in response to receiving a request to access the electronic resource, the request comprising the electronic representation of the code, returning the resource identifier associated with the code as obtained from the database.

2. The method of claim 1, in which the machine-readable representation comprises a bar code in accordance with ISO/IEC 18004:2006.

3. The method of claim 1, in which in response to the request to associate or the request to access, first the received electronic representation is validated to ensure the received electronic representation is indeed an electronic representation of the generated code.

4. The method of claim 1, in which the resource identifier is a uniform resource identifier as defined in Internet RFC 3986.

5. The method of claim 1, in which the association of the code with the resource identifier is stored in the database (350) using an indirection whereby the code is stored associated with an intermediary code in a first tuple and the intermediary code is stored associated with the resource identifier in a second tuple.

6. The method of claim 1, in which in response to the request to associate, first a verification is carried out to establish that the code has not been previously associated with any resource identifier.

7. The method of claim 1, in which the generated code comprises at least one element that is common to all codes generated.

8. A system (100, 300) for enabling access to an electronic resource through a resource identifier, comprising:
● a code generator (101) for generating an arbitrary code unrelated to the resource identifier,
● a printing arrangement (150) for causing a machine-readable representation (181) of the code to be coupled to the surface of an object (180),
● means for causing the object to be distributed to a recipient (390),
● code association means (301, 303) for receiving from the recipient (390) a request to associate the code with the resource identifier, the request comprising an electronic representation of the code, and, in response to the request, storing an association of the code with the resource identifier in a database (350),
● code translation means (301, 310) for in response to receiving a request to access the electronic resource from a further entity, the request comprising the electronic representation of the code, returning the resource identifier associated with the code as obtained from the database (350).

9. The system of claim 8, comprising a validation generator (302) for validating the received electronic representation to ensure the received electronic representation is indeed an electronic representation of the generated code.

10. The system of claim 8, in which the code translation means (301, 310) are configured for, upon an unsuccessful attempt to obtain any resource identifier associated with the code from the database (350), activating the code association means (301,303).

11. The system of claim 8, in which the code translation means (301, 310) are configured to obtain an indication of a geographical location associated with the further entity and for returning the resource identifier incorporating the indication.

12. The system of claim 8, in which
● the request to associate relates to plural resource identifiers, the code association means (301, 303) being configured for storing the code associated with each of the plural resource identifiers, each resource identifier being associated with a respective geographical indication,
● the code translation means (301, 310) are configured to obtain an indication of a geographical location associated with the further entity and to return one of the plural resource identifiers associated with the code and with the indication of the geographical location.

13. A computer program product comprising machine-readable instructions for causing a processor to execute the method of claim 1.
